# EUROPEAN PATENT APPLICATION

(11) **EP 4 799 489 A1**
(43) Date of publication of application: **02.09.2026**
(21) Application number: 25160278.5
(22) Date of filing: 26.02.2025
(51) Int. Cl.: A23J 3/22, A23P 30/00

(54) **PROTEIN STRUCTURING MODULE FOR USE IN A FOOD PRODUCT MANUFACTURING ARRANGEMENT**

(71) Applicant: Nederlandse Organisatie voor toegepast- natuurwetenschappelijk onderzoek TNO, 2595 DA 's-Gravenhage (NL)
(72) Inventor: Van Bommel, Kjeld, 2595 DA 's-Gravenhage (NL); Hoppenbrouwers, Marcus Benedictus, 2595 DA 's-Gravenhage (NL)
(74) Representative: V.O.

(57) **Abstract**

The present document relates to a protein structuring module for use in a food product manufacturing arrangement. The protein structuring module comprises one or more conduits between an inlet section and an outlet section, each conduit having an inlet at the inlet section for receiving a protein constituent and an outlet at the outlet section for providing a structured food substance including a structured protein material. The one or more conduits are configured for establishing a shear stress in the protein constituent for unfolding and/or aligning molecules in the protein constituent, such as to form the structured food substance. Furthermore, the protein structuring module comprises a chamber between the inlet section and the outlet section, and the protein structuring module further comprises one or more inserts configured for being inserted in the chamber for forming an insert bundle in the chamber of the protein structuring module. The one or more conduits are formed by gaps between the inserts. The document further relates to a food product manufacturing arrangement, a protein heating module, and a method of manufacturing the protein structuring module.

## Description

### Field of the invention

The present invention is directed at a protein structuring module for use in a food product manufacturing arrangement. The protein structuring module comprises one or more conduits between an inlet section and an outlet section, each conduit having an inlet at the inlet section for receiving a protein constituent and an outlet at the outlet section for providing a structured food substance including a structured protein material. The one or more conduits are configured for establishing a shear stress in the protein constituent for unfolding and/or aligning molecules in the protein constituent, such as to form the structured food substance. The present invention is further directed at a food product manufacturing arrangement, at a protein heating module, and at a method of manufacturing a protein structuring module.

### Background

The demand for animal-based food product substitutes has been steadily increasing over the past decennia, driven by a growing interest in more environmentally friendly alternatives to animal-based food products including meat, fish, cheese, etc. Consumers report willingness to eat plant-based foods, but also ask for higher quality products.

Various methods of processing protein materials to form animal-based food product and fish substitutes are known and applied in industry. One of these methods includes two counterrotating, concentric cylinders or cones, together forming a Couette cell. A non-structured protein constituent residing in the gap between the two cylinders is subjected to heat, which makes the proteins unfold. The protein constituent is further subjected to shear stress from the counterrotating drums, which subsequently aligns the protein molecules. A disadvantage of this method is that the product can only be produced in batches, which - although this may be automated - is labor-intensive in an industrial setting. After each batch, the processed protein materials have to be removed from the cell and replaced with a new batch of unprocessed protein constituent.

Other methods of processing protein constituents to form animal-based food product substitutes include the use of single screw or double screw extruders, in which protein constituents are simultaneously subjected to heat and shear stress while being driven through a barrel. These methods allow for continuous production of the animal-based food product substitute to be manufactured and the material may be processed further in order to obtain arbitrary shapes. However, a disadvantage is that the components involved in these methods are difficult to clean. This likewise hampers the industrialization of the process. Also, this process typically produces extrudates with a fixed shaping, such as a thick filament extrusion in a "sausage-like" shape.

### Summary of the invention

It is an object of the present invention to provide a protein structuring module, a food product manufacturing arrangement, a protein heating module, and a method of manufacturing the protein structuring module which overcome the abovementioned drawbacks, and which allow for producing animal-based food product alternatives efficiently in industrial settings, while simultaneously being easy to maintain.

To this end, in accordance with a first aspect of the invention, there is provided herewith a protein structuring module for use in a food product manufacturing arrangement, wherein the protein structuring module comprises one or more conduits between an inlet section and an outlet section, each conduit having an inlet at the inlet section for receiving a protein constituent and an outlet at the outlet section for providing a structured food substance including a structured protein material, the one or more conduits being configured for establishing a shear stress in the protein constituent for unfolding and/or aligning molecules in the protein constituent, such as to form the structured food substance, wherein the protein structuring module comprises a chamber between the inlet section and the outlet section, and wherein the protein structuring module further comprises one or more inserts configured for being inserted in the chamber for forming an insert bundle in the chamber of the protein structuring module, wherein the one or more conduits are formed by gaps between the inserts.

Ordinarily, channels are challenging and time-consuming to clean because they are formed as interior spaces within solid objects, like tubes. As a result, cleaning usually requires the use of a long or otherwise specialized cleaning tool, which gives the operator limited control over precise positioning of the tool within the channels. This can also obstruct the operator's view, making it difficult to spot areas that require focused cleaning. In the present invention, the channels are instead formed by the exteriors of solid objects. Cleaning the exterior of an object is significantly less complex than cleaning an interior space of an object. In particular, the present invention forms the channels as gaps between inserts that are inserted into a chamber of the protein structuring module. Inserts in the present invention may be discrete elements or may alternatively be part of an integrated whole or arrangement of releasably attached parts. In other words, the term 'insert' refers to an individual component or an arrangement of components that form conduits within the chamber of the protein structuring module. The inserts may include separate elements (e.g., rods, panels) or integrated structures where multiple inserts are fixed relative to each other. The inserts may either be solid, or in alternative embodiments the inserts may be hollow. Hollow inserts have the additional advantage of requiring less material to be produced, making them more efficient from both an economic and material perspective. Furthermore, the inserts may be used to influence the temperature inside the chamber. For example, hollow inserts may allow for a cooling fluid to flow through them. Also, solid inserts may be provided as heating elements for heating the inside of the chamber. The inserts run from the inlet section of the protein structuring module to the outlet section of the protein structuring module. The gaps between the inserts run along the lengths of the inserts. In other words, the insert bundle in the chamber comprises intermediate regions between the inserts, which define the conduits of the protein structuring module. The intermediate regions, or empty spaces between the inserts allow for the flow of the protein constituent through the protein structuring module, and the exteriors of the inserts subject the protein constituent to shear stress for unfolding and/or aligning protein molecules in the protein constituent. Through insertion into the chamber, the inserts thus form a one or a plurality of conduits that run between the inlet section and the outlet section of the module. The inserts can then be removed from the chamber, and as a result the channels of the protein structuring module are cleaned by cleaning the exteriors of the inserts. For example, the inserts may be cleaned in an industrial washing system, with which the required involvement of the operator in the cleaning process would be minimized. Additionally, removal of the inserts also provides easy access to the interior wall of the chamber for cleaning thereof. Through this simplification of the cleaning process, the invention enables the channels to be cleaned much more quickly. This makes the overall operation of the protein structuring module, which includes both the production of structured food substances and maintenance of the module, both easier, since the exteriors of the inserts are easy to access, and significantly more efficient by reducing downtime due to cleaning, which is an important advantage in industrial settings. Each of the conduits receives a protein constituent including a protein material at the inlet and subjects it to shear stress in order to unfold and align the molecules in the protein material. The protein constituent can be continuously provided to the conduits of the protein structuring module, and the protein structuring module can consequently continuously provide a structured food substance at the outlet section of the module. The protein structuring module according to the invention in other words is suitable for continuous production of a structured food substance. The protein constituent, prior to being subjected to shear stresses in the conduits, typically has a soft, cohesive composition reminiscent of a paste or dough. It may also enter a viscous, liquid state, particularly when it is also subjected to heating. In this unstructured state, the molecules of the protein constituent are folded in a globular state and randomly oriented. By subjecting the protein constituent to shear stresses in the shear channel, the molecules are transformed into a more unfolded and aligned state. Subjecting the constituent to these shear stresses thus yields the structured food substance, including a more structured protein material. Heating of the protein constituent is a prerequisite for unfolding the molecules of the protein material and for allowing them to be aligned using the shear stresses. This heating may however be done prior to the protein constituent being provided to the protein structuring module, or alternatively may be done inside of the protein structuring module. In embodiments where the protein constituent is heated prior to reaching the protein structuring module, there is an additional advantage in that the minimally required distance that the protein constituent has to traverse through the conduits is smaller than in embodiments where heating is done when the protein constituent is already being pushed through the conduits of the protein structuring module. Furthermore, the one or more inserts in the chamber forms one or more substantially parallel conduits in the chamber of the protein structuring module, although in some embodiments of the invention adjacent inserts may have different orientations from each other along sections of their lengths. Since each of the conduits is able to simultaneously provide a structured food substance at the outlet section of the protein structuring module, the individual strands of structured food substance provided by the individual conduits can be combined with the other strands while they still have a sufficiently high temperature in order to provide a stream of structured food substance with desired dimensions. The protein structuring module according to the invention therefore provides a high degree of freedom for tuning the provided structured food substance. Moreover, a number of the conduits of the protein structuring module may be provided with a different material than the other conduits, such as a fat or fat-like material. The composition of the provided substance, including the juiciness or texture of it, may thus be tuned in the protein structuring module according to the invention. This further contributes to the freedom in tuning the provided structured food substance provided by the protein structuring module according to the invention.

In accordance with some embodiments of the invention, the one or more inserts are provided as one or more rods; or the one or more inserts are provided as one or more of solid panels to be inserted in the chamber, such as to form the insert bundle in the chamber as an array of solid panels. It is understood in the present specification that rods or panels may be straight along their lengths, but may alternatively have more complex shapes, e.g. varying in orientation along their lengths. In embodiments where the inserts are provided as rods, removal of the inserts from the protein structuring module after operation of the module advantageously provides parts that are not only easy to clean, but also compact. Their compactness minimizes storage needs. This also increases the number of inserts that can be washed in a single machine in a single washing cycle. Furthermore, the rods, due to having a substantially longitudinal shape and being relatively small in width compared to the length of the rod, are easy to handle. This simplifies both insertion and removal of the inserts. Moreover, a compact structure of the inserts may allow for more thorough and efficient cleaning, thereby reducing the risks of residues and contamination. Additionally, the longitudinal shape of rods combined with their relatively small widths allows them to be positioned in the chamber without specific orientation requirements (within the planes that are substantially parallel to the inlet section and/or the outlet section of the module). This may help promote a uniform heat transfer within the protein structuring module, thereby enhancing the process efficiency. The widths of the rods may be defined (locally) by the cross-sectional shapes of the inserts transverse to their lengths, which cross-sectional shapes may take various forms, such as polygonal shapes, circular shapes, elliptical shapes, teardrop shapes, arcuate shapes. This cross sectional shape may also vary along the length of the rod. In embodiments where the inserts are provided as panels, removal of the inserts from the protein structuring module after operation of the module provides structures that have large surfaces. These surfaces likewise are much easier to clean than narrow channels because of the accessible surfaces, which allow for straightforward washing. The protein structuring module according to these embodiments in use provides the structured food substance in the form of slabs. The gaps forming the conduits in the protein structuring module according to these embodiments are long slits, which make use of a large proportion of the volume inside of the chamber for forming the conduits. Consequently, the protein structuring module according to these embodiments advantageously is able to provide large streams of structured food substance with each conduit. This also reduces the need for mixing of streams provided at the outlet section of the proteins structuring module in order to achieve larger thicknesses. Streams of larger thicknesses created in accordance with these embodiments may therefore have higher structural integrity, because of a reduced amount of mixing of streams of structured food substance after they have been provided at the outlet section of the module. In some of these embodiments, the solid panels may be inserted in row into the chamber of the module, similar to baking trays in an oven. Here too, the panels may be straight along their lengths, or alternatively they may be curved panels or otherwise more complexly shaped. In that case, it is important for the chamber to be highly robust in order to maintain an appropriate pressure distribution within the protein structuring module. In alternative embodiments however, some of the solid panels may be inserted into the chamber in a transverse orientation relative to the other solid panels. Solid panels then may be provided with slots running along part of the lengths of the solid panels between the inlet section and the outlet section of the protein structuring module. In some of these embodiments, a number of the conduits formed by the inserts can be provided with a different material than other conduits. For example, some conduits may be provided with a fat or fat-like material. This may help in manufacturing food products with more complex compositions, such as fish-like (in particular salmon-like) food products or marbled meat-replacement products. Alternating conduits may then for example provide alternating substances for creating a food product with alternating layers of differing substances - e.g. structured food substance layers and fat layers.

In accordance with some embodiments of the invention, the one or more inserts are curved plates, the curved plates being configured for being inserted in the chamber in a circular arrangement for forming the insert bundle. In other words, the inserts in these embodiments are nested inside each other. In these embodiments, the gaps may run around the full circumferences of the curvatures of the inserts. In embodiments where the inserts are curved into cylindrical shapes for example, the gaps may be cylindrical shells with incrementally increasing radii. Accordingly, each consecutive conduit can accommodate an increasingly large amount of protein constituent to be subjected to shear stress. Advantageously, the widths of the conduits can be tuned in these embodiments by selectively leaving individual inserts out of the chamber. In an illustrative example, in embodiments where there is a set of two inserts for the protein structuring module, a choice may be made between forming a wider conduit defined by the through hole of the larger insert through leaving out the smaller insert, or instead of that wider conduit forming two conduits that are more narrow, through insertion of the smaller insert into the through hole of the larger insert. The protein structuring module in accordance with these embodiments therefore advantageously provides a high degree of flexibility in the configuration of the protein structuring module according to any specific requirements of a user on the properties of the structured protein substance provided at the outlet. The inserts of the protein structuring module according to these embodiments may have various shapes, including shapes that differ from each other. As long as the inserts are dimensioned such as to make them insertable in through holes of other inserts, different shapes may be used to locally tune the widths of conduits.

In accordance with some embodiments of the invention, the plurality of inserts of the insert bundle are concentric. This is the most simple variant of the embodiments where inserts are configured for being inserted into the through holes of other inserts. In embodiments where the concentric inserts are of the same cross-sectional shape, the protein structuring module can provide a structured food substance that is uniform along the full circumference of the conduit, because the conduits are uniform in shape and thickness along their full circumferences and along their full lengths. These embodiments therefore provide a great degree of control over the properties of the structured food substance.

In accordance with some embodiments of the invention, the one or more inserts form an integrated whole, wherein the integrated whole is configured for being deformed for being inserted into the chamber. Advantageously, the insert bundle in these embodiments can be inserted into the chamber and removed therefrom as a single unit and the actions of insertion and removal can therefore also be conveniently performed as a single, rapid action. The integrated whole can be deformed into a desired or suitable shape for being inserted into the chamber, and can also be deformed into a desired or suitable shape for being easily cleaned. The term "deformed" in the specification is understood to mean rearranged, reconfigured, or otherwise reshaped, as further elaborated upon below. For example, in some embodiments the insert bundle may be formed by a plurality of rods that are attached to each other at specific points along their lengths. The rods may for example be attached via projecting parts that serve as distancers between the rods, or in other examples may be attached via chain links or threads. The rods may then be rolled into a shape that complements the shape of the chamber. For example, if the chamber defines a cylindrical cavity for being inserted with the insert bundle, the insert bundle may be rolled into a cylindrical shape for this purpose. For cleaning the inserts, the cylindrically shaped insert bundle may then be removed from the chamber and unrolled or unwound into a series of adjacent rods. These embodiments in other words have the advantage of high versatility, as shape of the insert bundle may be adapted to be maximally advantageous for the respective purposes of forming conduits in the protein structuring module, and of cleaning the inserts. The attachment may even be removable, such as to provide a plurality of inserts to be cleaned individually. This further enhances the ease with which the inserts may be cleaned. In alternative embodiments where the inserts are solid panels, the solid panels may be provided with similar attachment means at the ends of the solid panels. In an unwound or unfolded state, the insert bundle is then a series of adjacent solid panels. These panels can be easily cleaned as described above. When the panels are to be inserted into the chamber, the panels may then be stacked for forming an array of solid panels for example by folding the integrated whole, leaving the attachment means on alternating sides of the panels. In embodiments where the inserts comprise through holes for being inserted with other inserts that are smaller in width than the through hole, the inserts may be provided with a railing system that allows the individual inserts to slide out of each other for being cleaned.

In accordance with some embodiments of the invention, the integrated whole is a flexible sheet configured for being deformed, such as to create spaced-apart surface area portions of the flexible sheet. In an unfolded state, the flexible sheet may lie completely flat, yielding two surfaces to be cleaned, on either side of the sheet. When the sheet is to be inserted into the protein structuring module, it may be deformed for example by means of folding the flexible sheet in a zig-zagging or meandering fashion, or by rolling the sheet in a spiraling fashion, or by other means. These embodiments provide a particularly advantageous means of providing narrow conduits in the protein structuring module, while keeping the parts of the module easy to clean, because in a deformed state inside of the protein structuring module, different surface area portions of the flexible sheet are positioned near other surface area portions of the flexible sheet in order to facilitate the high levels of shear that are necessary for aligning of the protein molecules. The flexible sheet is easy to clean, because it can be unrolled, unfolded or otherwise brought into an exposed state, so that the full sheet is accessible for cleaning.

In accordance with some embodiments of the invention, the one or more inserts comprise a number of projecting parts extending in transverse directions with respect to lengths of the inserts, the projecting parts providing spacings between the inserts in the insert bundle. In some of these embodiments, the cross-sectional shapes of the inserts may be hexagonal. In those embodiments, the inserts when inserted into the chamber of the protein structuring module in the absence of the projecting parts may bunch together without leaving gaps in between the inserts for forming the conduits of the protein structuring module. Other examples of cross-sectional shapes for which this may occur in the absence of the projecting parts include: triangular shapes, rectangular shapes, pentagonal shapes and combinations of various of these. The projecting parts in other words are spacers or distancers that may create or contribute to the gaps between the inserts. In embodiments where the cross-sectional shapes are such that they leave gaps in between the inserts without the need for the projecting parts in between them, the projecting parts may still provide the insert bundle with additional spacings in between the inserts, thus creating a larger effective total volume of the conduits of the protein structuring module. For example, in embodiments where the inserts are cylindrical rods, the inserts inherently leave star-shaped gaps between them. The projecting parts in these embodiments advantageously increase the size of these star-shaped gaps, but simultaneously create additional gaps between the inserts at the spots where the rods would otherwise be contiguous to each other in the insert bundle. The projecting parts in other words advantageously contribute to the size of the conduits in the protein structuring module.

In accordance with some embodiments of the invention, the projecting parts of each insert are releasably attached to the other inserts in the insert bundle, wherein lengths of the projecting parts define local widths of the one or more conduits. In some embodiments, each insert includes projecting parts that releasably engage with complementary slots on neighboring inserts. This configuration allows the projecting parts to fit securely into these slots, providing a stable connection that holds the inserts in place within the insert bundle while enabling easy release when needed. Alternatively, the inserts may be held in position by a carrier or support structure of the protein structuring module with designated openings that keep each insert in place. In both examples, the inserts are maintained in alignment relative to one another, while still allowing for easy disassembly. The projecting parts then define the width of a conduit around or near the location of the projecting part depending on its length. In this way, projecting parts may push specific inserts further away from each other, bringing other inserts closer together in the chamber of the protein structuring module. In this way, these embodiments, may advantageously contribute to the complexity of the structured food substance that is provided at the outlet section of the protein structuring module, because the protein constituent will be subjected to different flow parameters in the different conduits.

In accordance with some embodiments of the invention, the chamber comprises an interior wall, wherein at least one of: the interior wall is provided with an attachment structure for securing the insert bundle in the chamber; and the interior wall is shaped for engaging with an outer contour of the insert bundle in the chamber, such as to secure the insert bundle in the chamber. When inserting the insert bundle into the chamber, the insert bundle also has to be securely fixed therein, such that in use, the structural integrity of the protein structuring module is maintained and the flow parameters to which the protein constituent will be subjected in use are stable, because the protein constituent is likely to be provided at the inlet section of the module at very high pressures. One of or both of the inserts and the interior wall of the chamber may therefore be provided with features in order to achieve this. The interior wall may for example include ridges, grooves, or slots designed to securely lock or align the insert bundle within the chamber. For instance, grooves along the interior wall can accommodate matching protrusions on the outside of the insert bundle, creating a stable connection that resists movement under high-pressure conditions. Alternatively, interlocking tabs could provide a releasable yet firm hold on the insert bundle. This prevents displacement of the inserts during operation and ensures consistent flow dynamics for the protein constituent. In alternative embodiments, the chamber may for example comprise a slightly tapered interior wall that narrows to grip the insert bundle more tightly as it is inserted. This shape-based engagement offers an advantage in that it provides secure positioning without the need for separate locking mechanisms, thus simplifying assembly and disassembly. Other examples of such shapings for the interior wall include a dovetail mechanism or a ribbed structure on the interior wall of the chamber for interlocking with a complementary part on the outer contour of the insert bundle.

In accordance with some embodiments of the invention, at least one of: at least some of the one or more inserts have a width that is uniform along a length of the insert; at least some of the one or more inserts have a width that varies locally along the length of the insert; and at least some of the one or more inserts have a width that differs from widths of other inserts. In embodiments where inserts have a uniform width along their length, consistent gap sizes between inserts are ensured in the insert bundle. This promotes a uniform flow distribution throughout the protein structuring module. For example, cylindrical rods with a constant diameter along their length provide stable conduits with known dimensions, which is advantageous for steady heat and mass transfer rates. Furthermore, uniformity simplifies manufacturing and assembly, as identical inserts can be interchanged without altering flow dynamics, thereby reducing production complexity and enhancing the predictability of processing conditions. Alternatively, some inserts may have a width that varies locally along their length, allowing for controlled variations in flow dynamics within the bundle. For instance, inserts with a tapered or stepped profile along their length can create areas of increased or decreased flow resistance, which can allow for mixing of separate streams within the module, or enhance control over specific structuring conditions and of the composition of the structured food substance. Tapering may also be used at the ends of the inserts in order to provide a gradual change in the flow parameters near the inlet section or the outlet section of the module. This can be advantageous for establishing a connection between the protein structuring module and another device because the other device may not have correspondingly shaped inlets or outlets with respect to the protein structuring module. A mismatch between devices can then result in unwanted effects on the protein material, such as expansion or separation of ingredients. In other embodiments, the protein structuring module may comprise inserts with a series of bulges or constrictions that may periodically alter the width of the flow channels. This variation in width allows for fine-tuning of flow parameters, making it possible to adapt processing conditions to specific requirements and to optimize the structuring environment for different materials or stages within the process. Alternatively, these variations in shape may still yield a uniform width along the length of the conduits. In those cases these embodiments may advantageously yield a larger total surface area for subjecting the protein constituent to shear stresses. In embodiments where at least some of the inserts have a different width than other inserts, the flow parameters inside of the conduits will correspondingly vary according to the gap sizes between the inserts and the shapes of the inserts. For example, in conduits defined by larger gaps between smaller inserts, there may be a smaller degree of structuring by shear stresses. Protein structuring modules according to these embodiments of the invention may therefore yield structured food substances which are structured or textured variably. This can advantageously be used to create food products, in particular animal-based food product substitutes, with local variations in the product's texture.

In accordance with some embodiments of the invention, the gaps between the inserts are defined by cross-sectional shapes of the one or more inserts, wherein the cross-sectional shapes are one or more of a group comprising: regular polygonal shapes, irregular polygonal shapes, circular shapes, elliptical shapes, teardrop shapes, arcuate shapes. The shapes of the gaps formed by the inserts are defined by the cross-sectional shapes of the inserts in these embodiments. For example, in embodiments where the inserts are cylindrical rods bunched or bundled together to form the insert bundle, the gaps formed by the inserts may for example have star-like shapes with three or more arms. Another way of describing the shape is a triangular or different polygonal shape with concave sides. In other words, the curved nature of the cross-sectional shapes of the inserts is reflected in the shapes of the gaps in the chamber of the protein structuring module. Similarly, if the inserts have polygonal cross-sectional shapes, such as square or rectangular shapes, this will also be reflected in the shapes of the gaps in the chamber, which will accordingly have straight sides. In some of these embodiments, each insert has the same cross-sectional shape. In those embodiments, the gaps formed in the chamber of the protein structuring module will be the most symmetrical. However, in alternative embodiments, some or all of the inserts may have different cross-sectional shapes. For example, in some embodiments the inserts of the insert bundle may alternate between elliptical or circular shapes, and polygonal shapes, such as triangular, rectangular or hexagonal shapes. In these embodiments, the gaps formed in the chamber of the protein structuring module are more complex, or less symmetrical. In yet further embodiments, multiple inserts may have complementary shapes. For example, some inserts may have a circular cross-sectional shape, while other inserts may have a shape that comprises a number of arcs that approximately or closely fit onto the circular shapes. Very narrow gaps may be formed thusly. The gap shapes in the protein structuring module can in other words be varied to a great degree by using inserts with differing cross-sectional shapes. The shapes of the gaps also influence flow parameters in the conduits, which are formed by the gaps. For example, a more symmetrical cross-sectional shape in the conduit will likely result in a more uniform velocity distribution in the channel. The inner width of the conduits can also be influenced by changing the cross-sectional shapes of the inserts, which influences the required pressure at the inlet section for achieving a certain level of shear stress inside the conduits. Replacement and interchanging of the inserts thus provides these embodiments with a large degree of freedom in influencing the flow parameters inside the conduits. This helps produce food products that can accordingly vary to a large degree in their textural and other properties.

In accordance with some embodiments of the invention, the cross-sectional shapes of at least some of the inserts morph along the lengths of the inserts into different cross-sectional shapes. These embodiments expand the complexity of flow parameters and consequently the structural properties that can be achieved with the protein structuring module. For example, at the inlet section inserts may have more smoothly curved cross-sectional shapes which locally form cylindrically shaped conduits. These smoothly curved shapes may then morph along the length of the conduits into more sharply angled cross-sectional shapes, making the conduits more complex and less smooth as the cross-sectional shapes of the inserts morph. Near the inlet section, where the conduits would in this example be highly smooth and symmetrical, the flow in the conduits would accordingly be highly laminar. As the protein constituent flows through the conduits and approaches the outlet section, the flow would get progressively more turbulent. Moreover, as the protein constituent approaches the outlet section, the local width of the conduit may increase near the angles of the conduit's cross-sectional shape and/or decrease further away from these angles. A shear gradient is thus introduced further into the conduit. Moreover, embodiments wherein inserts morph between different cross-sectional shapes along the longitudinal direction of the inserts further increase the freedom provided by the protein structuring module, because the inserts in these embodiments are asymmetrical along the longitudinal direction. In the above discussed example, if the orientations of the inserts along the longitudinal direction of the chamber were reversed, the smoothly curved shapes of the conduits would be positioned near the outlet section of the protein structuring module, while the more sharply angled cross-sectional shapes of the inserts would be positioned near the inlet section. Other embodiments may include inserts morph between different cross-sectional shapes at the inlet ends and outlet ends thereof than discussed in the above example, including for example circular cross-sectional shapes and elliptical cross-sectional shapes. In these embodiments, the shapes and dimensions of the conduits also vary along the longitudinal direction of the inserts, which may also be leveraged to tune the flow parameters to the requirements of a specific case.

In accordance with some embodiments of the invention, the cross-sectional shapes of at least some of the inserts vary in rotational orientation along the lengths of the inserts. In some of these embodiments, the inserts may comprise a rectangular cross-sectional shape that continuously shifts in its rotational orientation along the longitudinal directions of the inserts. As the corners of the rectangular shapes rotate around the longitudinal axes of the inserts in these embodiments, the widths of the conduits formed by these inserts vary between a minimum width at points along the length of the inserts where sides of the rectangular shapes of adjacent inserts face each other, and a maximum width at points where corners of the rectangular shapes of adjacent inserts face each other. This variation may be periodic and the widths of the conduits may consequently vary between the minimum and maximum widths one or more times, but in other embodiments the variation may not be periodic - i.e. the rate of variation may for example be non-linear. The shear stress applied to the protein constituent may therefore be advantageously controlled in these embodiments. For example, in embodiments where the rotational orientations of the inserts shift along their longitudinal directions in such a way that the widths of the conduits increase from their minimum widths at the inlet section to their maximum widths at the outlet section, the shear stress to which the protein constituent flowing through the conduits is subjected accordingly decreases. The flow parameters of the protein constituent can in other words be advantageously controlled in these embodiments. Furthermore, variation in the rotational orientation of inserts can result in longer conduits within the chamber, because the conduits formed by gaps between inserts according to these embodiments can follow paths that spiral around a longitudinal axis. This path is therefore longer than a straight path would be between the same inlet and outlet. This enables the protein constituent flowing through the conduits to be subjected to shear stresses along longer distances, which can increase the alignment effects caused by the shear stresses.

In accordance with some embodiments of the invention, at least some of the one or more inserts extend outward from the chamber for shaping the inlet section and/or the outlet section. By having inserts extend outwardly from the chamber of the protein structuring module, the inlet section and/or the outlet section may be shaped in a specific way that may be more suitable for connecting either section of the module to a further apparatus used for the manufacturing of a food product. Ordinarily, if for example the outlet section of the module were connected to a further apparatus for further processing of the structured food substance, there would likely be a mismatch with the inlet of said further apparatus, resulting in dead volume near the interface between the protein structuring module and the further apparatus. This may result in some of the structured food substance residing in the dead volume for extended periods of time, or may result in a low pressure zone in the dead volume that extracts water or other liquids from the structured food substance. It might also result in a section with an undesired (e.g. turbulent) flow pattern, possibly resulting in an at least partial loss of the previously achieved alignment of the protein. Any of these possibilities would interfere with the properties of the structured food substance and is therefore undesirable. The inserts may extend outward from the chamber in accordance with the present embodiments, in order to at least partially solve this problem, in particular by choosing the lengths with which the inserts extend in such a way as to smooth the transition of the structured food substance from the protein structuring module to the further apparatus as much as possible. This may similarly be applied to a transition between another apparatus and the inlet of the protein structuring module.

In accordance with a second aspect of the invention, there is provided herewith an arrangement for providing a structured food substance for manufacturing a food product, wherein the structured food substance includes structured protein material, the arrangement comprising a protein structuring module according to any of the preceding claims, wherein the protein structuring module comprises one or more conduits between an inlet section and an outlet section, each conduit having an inlet at the inlet section for receiving a protein constituent and an outlet at the outlet section for providing a structured food substance including a structured protein material, the one or more conduits being configured for establishing a shear stress in the protein constituent for unfolding and/or aligning molecules in the protein constituent, such as to form the structured food substance, wherein the protein structuring module comprises a chamber between the inlet and the outlet section, and wherein the protein structuring module further comprises one or more inserts configured for being inserted in the chamber for forming an insert bundle in the chamber of the protein structuring module, wherein the one or more conduits are formed by gaps between the inserts.

Food product manufacturing arrangements that push a protein constituent through one or more conduits typically have the disadvantage that they are difficult and time-consuming to clean. This is because these arrangements typically comprise long, narrow channels through which the protein constituents are pushed that are difficult to reach into for removing residues. However, arrangements according to the second aspect of the invention comprise a protein structuring module according to the first aspect of the invention. The conduits in these channels are therefore formed by gaps between inserts in a chamber of the protein structuring module. These inserts form an insert bundle inside of the chamber and thereby form conduits through which a protein constituent can be pushed. Due to interaction with the walls of the conduits, which are provided by the exterior surfaces of the chamber of the module, the protein constituent flowing through the conduits is subjected to shear stresses for aligning the protein molecules in order to make them more closely resemble protein molecules in animal-based food product-based and fish-based food products. Before being subjected to shear stresses in the conduits, the protein constituent typically has a soft, cohesive texture similar to a paste or dough. It may also be provided to the conduits in a viscous, liquid state, especially when heated. In this unstructured state, the protein molecules are globular and randomly oriented. Applying shear stresses in the conduits transforms these molecules into a more aligned configuration, resulting in a structured protein material. During maintenance of the arrangement, the inserts can simply be removed and cleaned on the outside. Cleaning the inserts on the outside is substantially more simple than cleaning the insides of long, narrow channels. By simplifying the cleaning process in this way, the invention allows the channels to be cleaned much more quickly. This enhances the overall efficiency of the protein structuring module and thereby provides a significant advantage in industrial applications. The protein constituent can be continuously supplied to the conduits of the protein structuring module, enabling the module to continuously deliver a structured food substance at its outlet. The one or more inserts in the chamber forms one or more substantially parallel conduits, each of which simultaneously produces a stream of structured food substance at the outlet, allowing these streams to be combined while maintaining a sufficiently high temperature. This facilitates the creation of a continuous stream of structured food substance with a desired thickness. As a result, the invention offers significant flexibility in adjusting and fine-tuning the properties of the structured food substance. Additionally, some conduits within the protein structuring module can be configured to process materials different from the other conduits, such as a fat or fat-like material. This enables control of the composition of the final substance, including its juiciness and texture. This capability further enhances the flexibility and versatility offered by the arrangement according to the second aspect of the invention. Heating the protein constituent is important for unfolding the protein molecules and enabling their alignment under shear stresses. This heating can be performed either before the protein constituent enters the protein structuring module in the arrangement or within the module itself. Heating the protein constituent beforehand offers the additional benefit of reducing the minimum distance it must travel through the conduits, compared to embodiments where heating occurs while the protein constituent is being processed within the conduits. This allows the arrangement to be kept more compact.

In accordance with some embodiments of the invention, the arrangement is a modular arrangement comprising one or more modules, the one or more modules including at least one protein structuring module according to any of the claims 1-12.In these embodiments, the modules in the arrangement are configured to be easily replaced with another module. The replacing module may be an identical module, for example when the removed module needs to be cleaned or otherwise maintained. This increases the efficiency of the arrangement, because it increases the proportion of time in which the arrangement can be operational. Moreover, modules can also be replaced with newly developed modules that contain technical improvements with respect to the removed modules, without the need to replace the arrangement in its entirety. A further advantage of these embodiments is that it can be employed at both small and large scales. Any single module according to the first aspect of the invention in the arrangement can form any number of conduits depending on the number and the dimensions of the inserts in the chamber of that module. However, the arrangement in these embodiments can also comprise a larger amount of such modules. Each of those modules can then be supplied with a protein constituent for being subjected to shear stresses in the conduits, and a larger amount of structured food substance can be provided in these embodiments depending on the amount of protein structuring modules used.

In accordance with some embodiments of the invention, the arrangement further comprises a heating element, wherein the heating element is configured for at least one of: heating the protein constituent outside of the protein structuring module; or heating the protein constituent inside of the conduits of the protein structuring module. Heating of the protein constituent makes the molecules unfold and receptive to the shear stresses in a protein structuring module in such a way as to enable the molecules to be aligned for forming the structured food substance. Heat may be applied to the protein constituent either before the protein constituent enters the protein structuring module. This may be done using an additional module that subjects the protein constituent to heat and subsequently provides the protein constituent to the protein structuring module in a heated state. But additionally or alternatively, the protein constituent may be subjected to heat while it flows through the one or more conduits of the protein structuring module. Applying heat to the protein constituent while it is flowing through the protein structuring module may be done to bring the protein constituent to the required temperature for aligning the molecules, or may be done to maintain said required temperature.

In accordance with some embodiments of the invention, the arrangement further comprises a protein heating module comprising the heating element, wherein the heating element includes a heating reservoir for exposing the protein constituent to heat, wherein the inlets of the conduits are connected to the heating reservoir for receiving the protein constituent in a heated state. In these embodiments, the protein constituent is heated before it enters the conduits of a protein structuring module in the arrangement. This reduces the minimum distance that the protein constituent must travel through the conduits relative to embodiments where heating is performed when the protein material including the protein constituent has already entered the conduits. In those alternative embodiments where the protein material first enters the conduits, there is a section of the conduits, in which the protein material has not yet been properly unfolded by heat, in which the shear stresses do not yet effectively align the molecules of the protein constituent. The conduits and therefore also the inserts in those embodiments consequently have to be longer. In embodiments in which the protein constituent is pre-heated before being supplied to the conduits, the arrangement can consequently be kept more compact, especially if the arrangement comprises more than one protein structuring module according to the first aspect of the invention. In these embodiments, the inserts or the chamber may be composed of materials that have a high thermal resistance in order to maintain the heat in the protein constituent, or in alternative embodiments the protein constituent may be continually heated, even as the protein material flows through the conduits.

In accordance with a third aspect of the invention, there is provided herewith a protein heating module for use in a food product manufacturing arrangement according to the second aspect of the invention, wherein the protein heating module comprises a heating element including a heating reservoir for exposing a protein constituent to heat, wherein the heating reservoir is configured for being connected to inlets of a protein structuring module according to the first aspect of the invention for providing the protein constituent to the protein structuring module in a heated state. By applying heat to the protein constituent before the protein constituent enters the protein structuring module, the required residence time of the protein material inside the protein structuring module is significantly reduced. This thereby reduces the required lengths of the conduits of the protein structuring module, and therefore also the required lengths of the inserts. In other words, the inserts can therefore be kept to a manageable length. This enables the inserts to be cleaned more efficiently, because there is a smaller total surface area to be cleaned.

In accordance with a fourth aspect of the invention, there is provided herewith a method of manufacturing a protein structuring module for use in a food product manufacturing arrangement, wherein the method comprises forming one or more conduits between an inlet section and an outlet section of the protein structuring module, each conduit having an inlet at the inlet section for receiving a protein constituent and an outlet at the outlet section for providing a structured food substance including a structured protein material, the one or more conduits being configured for establishing a shear stress in the protein constituent for unfolding and/or aligning molecules in the protein constituent, such as to form the structured food substance, wherein for the step of forming the one or more conduits, the method comprises providing an element comprising a chamber, wherein the step of forming the one or more comprises providing one or more inserts, and further comprises inserting the one or more inserts into the chamber, such as to form an insert bundle in the chamber of the protein structuring module between the inlet section and the outlet section, wherein the step of inserting the one or more inserts forms gaps between the inserts, the gaps forming the one or more conduits.

By forming the conduits as gaps between inserts, the method according to the third aspect of the invention provides a protein structuring module according to the first aspect of the invention. Such a protein structuring module is significantly easier to clean than known protein structuring modules. This is because the inserts can simply be removed from the chamber and cleaned from the outside. The challenge of cleaning the conduits of existing protein structuring modules, which is greatly contributed to by the need to reach deeply into conduits of considerable length, is hereby greatly reduced. Cleaning the exteriors of the inserts is significantly simpler and faster than cleaning interior surfaces of conduits, because each part of the exterior of the insert is exposed and therefore substantially more easy to reach than deep spots inside a conduit. Moreover, cleaning of the inserts can be performed using industrial washing systems to minimize operator involvement. Consequently, the third aspect of the invention enables to significantly improve the efficiency of maintenance operations. The third aspect of the invention also provides a large amount of flexibility, in that inserts of various shapes and sizes may be chosen and inserted into the chamber to form the insert bundle. The shapes of the gaps between the inserts, and therefore also the flow parameters can thereby be influenced, which affect the properties of the structured food substance provided at the outlet of the manufactured protein structuring module.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figures 1A-1B schematically illustrate respectively a protein structuring module in accordance with an embodiment of the invention and an empty chamber of the module with removed inserts.
Figures 2A-2B schematically illustrate respectively a protein structuring module in accordance with an alternative embodiment of the invention and an empty chamber of the module with removed inserts.
Figure 3 schematically illustrates a protein structuring module in accordance with a further alternative embodiment of the invention and with a number of removed inserts.
Figures 4A-4B schematically illustrate respectively a protein structuring module in accordance with a yet further alternative embodiment of the invention and an empty chamber of the module with removed inserts.
Figures 5A-5B schematically illustrate inserts as parts of integrated wholes in accordance with two embodiments of the invention.
Figures 6A-6B schematically illustrate two inserts with various cross-sectional shapes in accordance with two embodiments of the invention.
Figure 7 schematically illustrates a cross-sectional view of an embodiment of a protein structuring module, comprising a insert provided as a flexible sheet.
Figure 8 schematically illustrates an embodiment of a protein structuring module connected to a further apparatus.
Figure 9 schematically illustrates a food product manufacturing arrangement in accordance with an embodiment of the invention.
Figure 10 schematically illustrates a method of manufacturing a protein structuring module in accordance with an embodiment of the invention.

### Detailed description

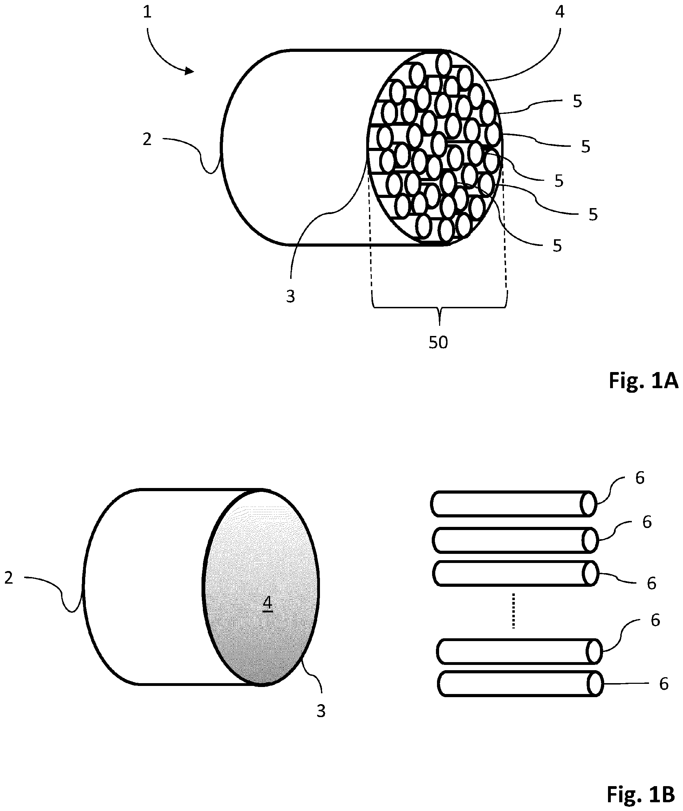

Figure 1A schematically illustrates a protein structuring module 1 in accordance with an embodiment of the invention. Protein structuring module 1 has an inlet section 2 and an outlet section 3, between which the protein structuring module includes a number of conduits. The conduits are formed as gaps between inserts 5, which are inserted in a chamber 4 for forming an insert bundle 50 therein. The conduits in other words are formed by the exterior surfaces of the inserts 5. Since the inserts 5 run between the inlet section 2 and the outlet section 3, the conduits also run between the inlet section 2 and the outlet section 3. In use, a protein constituent may be supplied at the inlet section 2 and pushed along the inserts 5 of the insert bundle 50, through the conduits. The protein constituent may be heated prior to being supplied to the protein structuring module 1, and may additionally or alternatively be heated while inside of the protein structuring module 1. The heating serves to unfold the protein molecules in the protein constituent. As the protein constituent flows through the conduits, it is subjected to shear stress and the unfolded protein molecules of the protein constituent are aligned, such as to form a structured food substance with protein molecules which resemble protein molecules of animal-based food products. When the protein structuring module 1 is not in operation, e.g. for maintenance purposes, meaning e.g. that the module 1 has to be cleaned, the invention advantageously makes this a significantly more simple matter than in known protein structuring modules, because in the shown protein structuring module 1, the inserts 5 can be removed and cleaned separately from the chamber 4 - see figure 1B. By removal of the inserts 5 from the chamber 4, cleaning of the protein structuring module 1 involves cleaning a large inner surface of the chamber 4 and cleaning the exterior surfaces of the inserts 5. This is significantly more easy to do than cleaning long, narrow channels as would be required in known protein structuring modules. In the embodiments shown in this figure, the inserts 5 are provided as rods 6. In embodiments such as the one shown presently, the inserts 5 in addition to being easy to clean are also compact. This minimizes the need for storage space when the inserts 5 are not to be placed in the chamber 4. The inserts 5 due to their compactness can also be placed in a variety of ways and orientations, thereby allowing for more efficient storage. A high number of inserts 5 in accordance with these embodiments can therefore also be cleaned simultaneously in an industrial washing machine. Furthermore, their small widths relative to their lengths make them easy to handle. Insertion of rods 6 in the chamber 4 can form either (in the case where the inserts are spaced apart) a single, large channel with many portions of "dead" fractions of cross-sectional surface area where the inserts are located, or (in the case where the inserts are contiguous to each other) many narrow channels for subjecting the protein constituent to shear stresses. In alternative embodiments, the inserts 5 may be provided having any of a variety of shapes, as will be further discussed below.

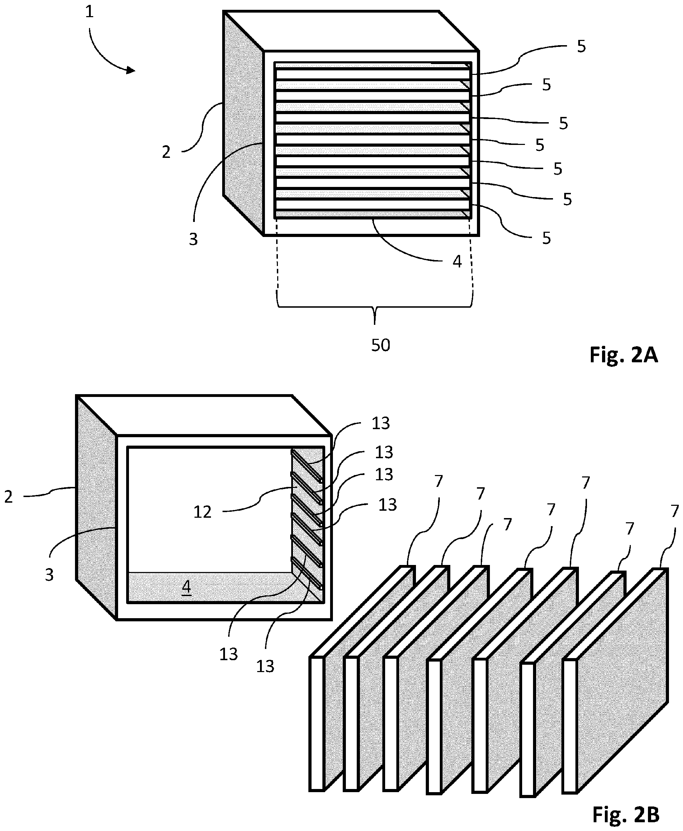

In figure 2A, the inserts 5 of protein structuring module 1 are provided as solid panels 7, which are shown removed from the chamber 4 in figure 2B. In embodiments such as the one shown presently, removal of the inserts 5 from the protein structuring module 1 outside of operation of the module 1 provides structures that have large surfaces to be cleaned. These large surfaces of panels 7 are likewise easy to clean because the entire surface to be cleaned may be easily accessible. Moreover, the protein structuring module 1 in accordance with embodiments such as the one shown presently provide the structured food substance at the outlet section 3 of the protein structuring module 1 in the form of slabs. These embodiments thereby are able to provide a wide stream of structured food substance continuously through each conduit and also increase the freedom in shaping of the structured food substance. Since the streams provided by the conduits formed by solid panels 7 may be larger in size than streams provided by conduits formed by rods, the need for combining of the streams, which may have different properties (even if slight), is also reduced. These embodiments may thereby improve the structural integrity of the structured food substance. In this embodiment, the solid panels 7 are inserted into the chamber 4 and held in place by attachment structures 13 on interior wall 12 of chamber 4. In alternative embodiments, the inserts 5 may be held in place inside the chamber 4 by means of a different attachment structure 13. For example, in embodiments where the inserts 5 are provided as rods, the interior wall 12 of chamber 4 may be provided with a lattice including openings for being filled with the rods. In those alternative embodiments, the rods would be suspended inside the chamber 4 in a fixed position because they are held in place by the lattice. Such a lattice may also be used in the present embodiment, in which the inserts 5 are provided as solid panels 7, as long as the openings in the lattice are complementarily shaped with respect to the inserts 5.

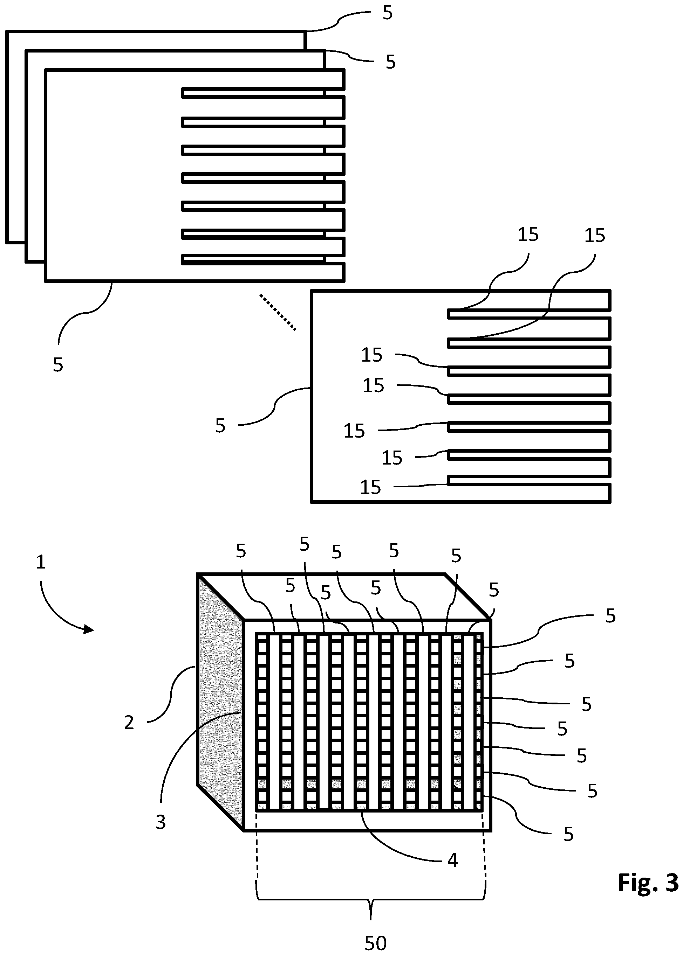

In figure 3, the inserts 5 are likewise provided as solid panels 7. Figure 3A shows the panels 7 when removed from the protein structuring module 1, while figure 3B shows the panels 7 as an insert bundle 50 formed by inserts 5 inside of chamber 4 of protein structuring module 1. In this embodiment, the solid panels 7 are provided with slots 15 which enable the solid panels 7 to be slided into each other in transverse orientations with respect to each other, as shown in figure 3B. In these embodiments, the conduits formed by the inserts 5 may be narrow - of small widths - similar to embodiments in which the inserts 5 are provided as rods.

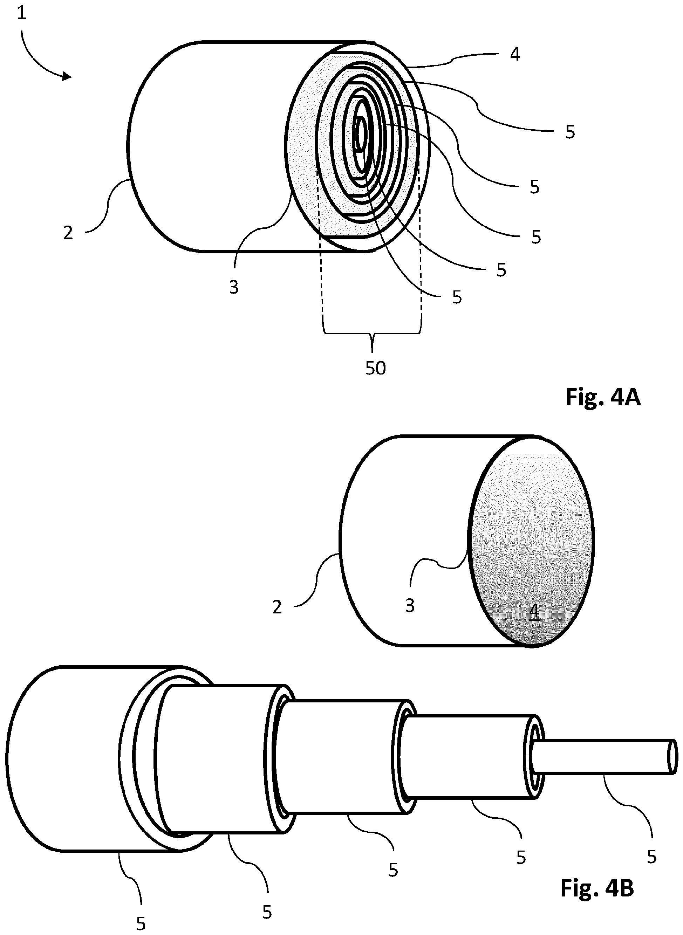

Figures 4A-4B schematically illustrate respectively a protein structuring module in accordance with a yet further alternative embodiment of the invention and an empty chamber of the module with removed inserts. In this embodiment, the inserts 5 are configured for being inserted into each other, thereby creating gaps between the inserts 5 of the insert bundle to yield conduits. Each of the gaps formed by an insertion of a first, or inner insert 5 into a second, or outer insert 5, is formed by an exterior surface of the first insert 5 and an interior surface of a through hole of the second insert 5. In the present figure, the inserts 5 may be seen as cylindrical shells with incrementally increasing radii, and which are concentric. Because of the increasing radii, the conduits of the protein structuring module 1 may allow for correspondingly incrementing amounts of protein constituent to flow through. Moreover, in this embodiment and in other embodiments some inserts 5 may be advantageously left out of the chamber 4, such as to locally create a wider gap. The flow parameters of the protein constituent through the conduits may be tuned in this way, which provides users with a greater degree of freedom in influencing the properties of the structured food substance provided at the outlet section 3 of the protein structuring module 1. In this figure, the inserts 5 may be attached to each other and may together form an integrated whole, as shown in figure 4B. The attachment may for example be realized using a rail system or other means of enabling the individual inserts 5 to be exposed for cleaning purposes.

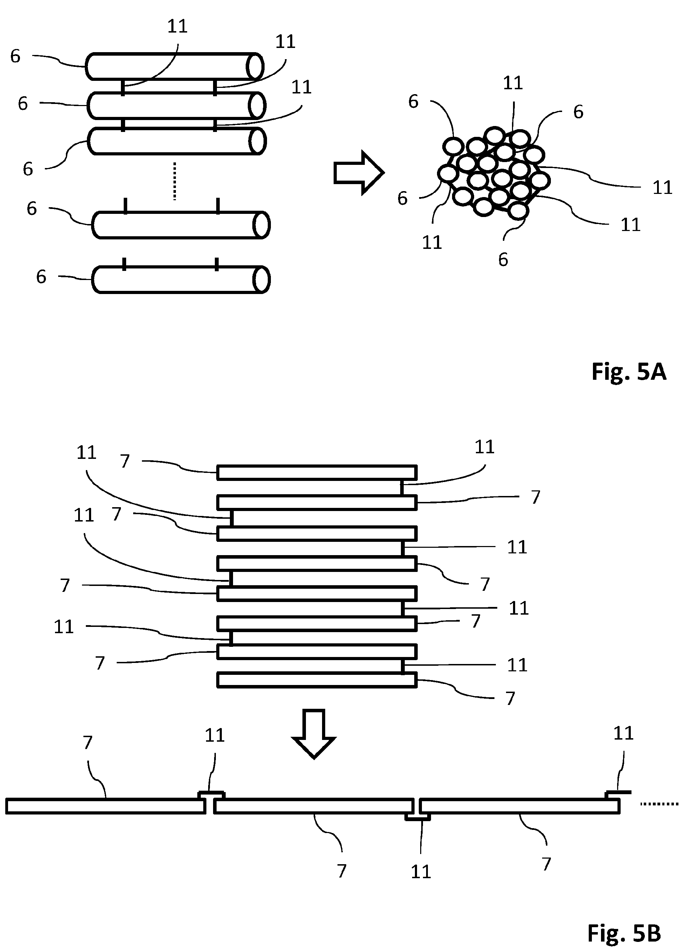

Figures 5A-5B schematically illustrate inserts 5 as parts of integrated wholes in accordance with two embodiments of the invention. In figure 5A, the inserts 5 are provided as solid rods 6 which comprise projecting parts 11. The projecting parts 11 may act as spacers or distancers between the rods 6 and may optionally serve to provide a connection between solid rods 6 wherein they are attached to each other. Each pair of two solid rods 6 may be provided with two projecting parts 11, as shown in the figure. In alternative embodiments, pairs of solid rods 6 may be provided with only a single projecting part 11 for defining the distance between the solid rods 6, or may alternatively be provided with a larger number of projecting parts 11 for this purpose. When the inserts 5 are to be inserted into a chamber of a proteins structuring module according to the invention, the inserts 5 as shown in the figure may be deformed to give it a suitable shape for insertion into the chamber by means of rolling the solid rods 6 in a spiraling fashion. The solid rods 6 may alternatively be deformed in another manner for this purpose, such as in a zig-zagging or meandering fashion. Figure 5B shows an alternative embodiment of inserts 5 as part of an integrated whole, in which the inserts are provided as solid panels 7. In this embodiment, projecting parts 11 are provided at lateral ends of each panel 7. The projecting parts 11 may be provided at one end of each panel 7, as shown here. In this embodiment, deformation of the solid panels 7 before being inserted into a chamber of a protein structuring module according to the invention may be performed by stacking of the panels 7. Solid panels 7 may then for example be shoved into the chamber, similarly to baking trays in an oven. In alternative embodiments, the projecting parts 11 may be provided on other or additional points on the panels 7.

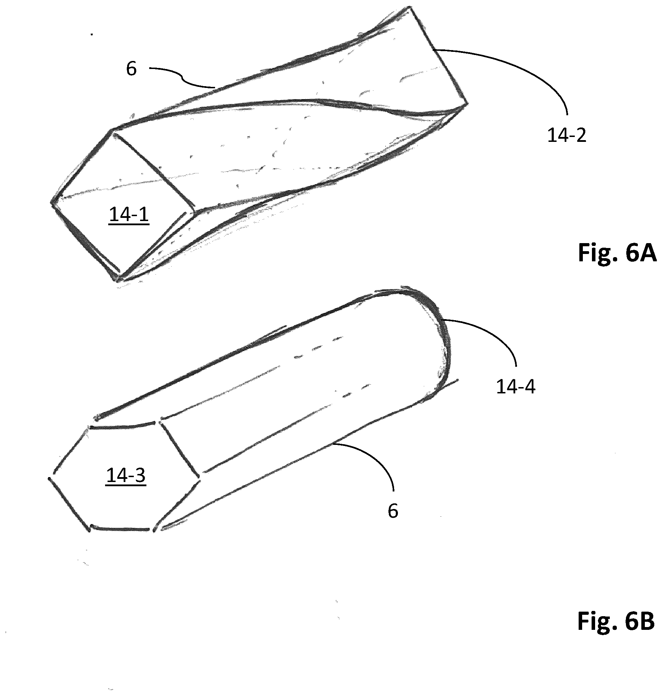

Figures 6A-6B schematically illustrate two solid rods 6 with various cross-sectional shapes in accordance with two embodiments of the invention. In figure 6A, the solid rod 6 has a diamond-shaped or square-shaped cross-sectional shape 14-1 on the proximal end and a same cross-sectional shape 14-2 on the distal end. Along the length of the solid rod 6, the cross-sectional shape 14 may rotate along the central axis of the solid rod 6. A protein structuring module in accordance with an embodiment of the invention may be provided with one or with a plurality of such solid rods 6. Insertion of these solid rods 6 into a chamber of the protein structuring module for forming of the conduits therein may then influence the flow parameters of the protein constituent inside of the conduits and thereby affect the properties of the structured food substance provided at the outlets of the conduits. These twisted rods 6 may introduce a helical path inside of the conduits and may force the protein constituent to follow a spiral trajectory through the conduits. The rotating cross-sectional shape 14 may also modulate the resistance to the flow and thereby the shear stresses experienced by the protein constituent. Turbulence of flow may also be increased in this manner, which may enhance mixing of materials with the protein constituent inside of the protein structuring module. In figure 6B, the proximal end of the visible solid rod 6 has a hexagonal cross-sectional shape 14-3, while the distal end has a circular cross-sectional shape 14-4. One or a plurality of such solid rods 6 may similarly be inserted into a chamber of a protein structuring module in accordance with an embodiment of the invention. In such embodiments, the flow of the protein constituent through the conduits formed by the solid rods 6 of figure 6B may similarly be affected, thereby similarly affecting the properties of the structured food substance provided at the outlet section of the protein structuring module. As the protein constituent flows between more angled parts of the solid rods 6, for example near a more angled cross-sectional shape 14 such as the hexagonal cross-sectional shape 14-1, to a less angled part of the conduits, for example near the circular cross-sectional shape 14-2, the flow may become less complex and more uniform. The corners of the hexagonal cross-sectional shape 14-1 may create zones of high shear and turbulence, which gradually disappear as the protein constituent flows toward the circular cross-sectional shape 14-2. Furthermore, in these embodiments, the solid rods 6 are also not symmetrical in the length direction of the solid rods 6. In some embodiments, the solid rods 6 may be inserted in the chamber with the opposite orientation, in order to achieve the reverse effect. In further embodiments, the solid rods may be inserted in alternating or varying orientations, thereby further increasing the complexity of flow parameters that may be achieved in the invention. Furthermore, in alternative embodiments, the inserts may be provided as solid panels. Solid panels may likewise be twisted to modulate the flow parameters throughout the conduits of the protein structuring module. If the module is provided with twisted panels, the inlets and the outlets of the conduits may be slit-shaped. The protein constituent may then be met with a flow resistance transversely oriented with respect to the flow direction of the protein constituent, due to the local bending of the panels.

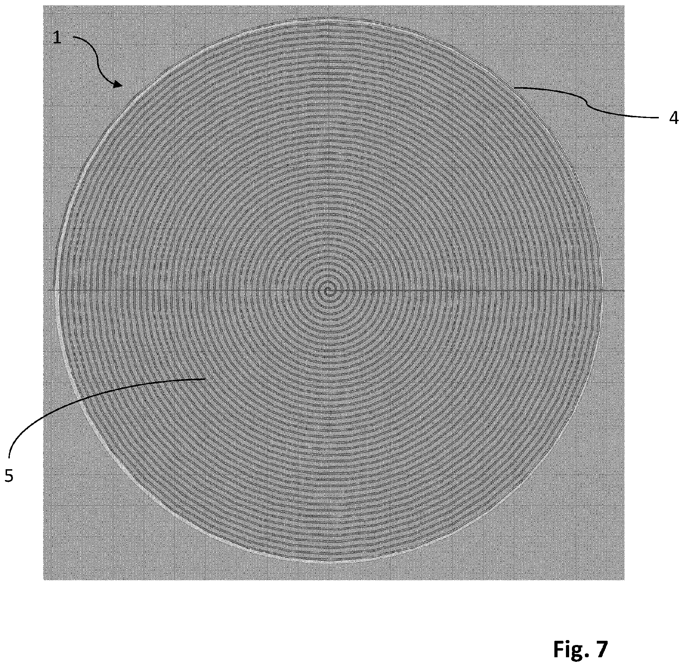

Figure 7 schematically illustrates a cross-sectional view of an embodiment of a protein structuring module 1, comprising a single insert 5 provided as a flexible sheet. The insert 5 in this embodiment is rolled in a spiraling fashion and inserted in the chamber 4 of the protein structuring module 1. In alternative embodiment, the flexible sheet may be folded or otherwise deformed before being inserted into the chamber 4. The rolled flexible sheet in this embodiment provides a single conduit which is very wide but at the same time it is narrow in the radial direction, as seen from this view. This makes the insert according to this embodiment very suitable for facilitating the required shear stress for aligning the molecules of the protein material in the protein structuring module 1. At the same time, removal of the insert 5 from the chamber 4 enables unrolling the flexible sheet into a flat state, exposing the full surface of the sheet on both sides thereof. This makes the insert 5 very easy to clean, because every part of the insert 5 is immediately accessible.

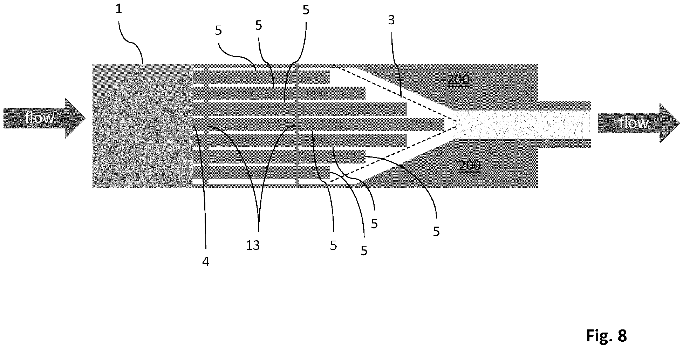

Figure 8 schematically illustrates an embodiment of a protein structuring module 1 connected to a further apparatus 200 for further processing of the structured food substance provided at the outlet section 3 of the protein structuring module 1. In this embodiment, the inserts 5 extend from the chamber 4 of the protein structuring module 1, thereby defining a convex shaping of the outlet section 3 of the protein structuring module 1. This convex shaping of the outlet section 3 is chosen in accordance with the shape of the inlet of the further apparatus 200, in which the structured food substance may be compressed and/or otherwise processed for manufacturing of a food product. This shape-matching may smooth the transition from the protein structuring module 1 to the further apparatus 200 as much as possible, in order to minimize effects on the structured food substance provided by the protein structuring module 1. In other or further embodiments, extension of inserts 5 such as described here may also be applied in order to smooth the connection between the inlet section of the protein structuring module 1 to another apparatus.

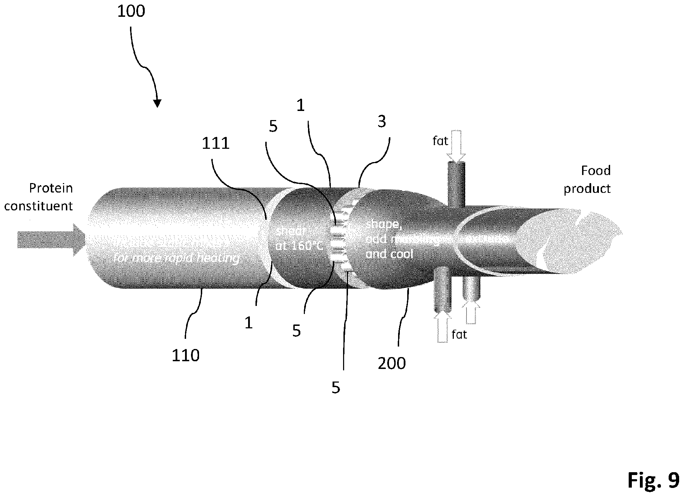

Figure 9 schematically illustrates a food product manufacturing arrangement 100 in accordance with an embodiment of the invention. The arrangement 100 includes a protein structuring module 1 for unfolding and/or aligning molecules in a protein constituent including a protein material, for thereby creating a structured food substance including a structured protein material. The protein structuring module 1 may receive the protein constituent from a protein heating module 110, which may include a heating reservoir 111. The protein heating module 110 may heat the protein constituent by means of the heating reservoir 111, such that the protein constituent may be provided to the protein structuring module in heated state. In alternative embodiments, the heating module 110 may heat the protein constituent by other means, or the protein constituent may be additionally or alternatively heated while inside of the protein structuring module 1. The food product manufacturing arrangement 100 may further include a protein shaping module 200. The protein shaping module 200 may receive the structured food substance from the protein structuring module 1 for further processing. This further processing may include mixing of the streams provided by multiple conduits of the protein structuring module 1. The further processing may also include injecting additional materials, such as fat or fat-like materials into the structured food substance. Addition of fat or other materials may enhance certain features of the structured food substance, such as its texture, juiciness or flavor.

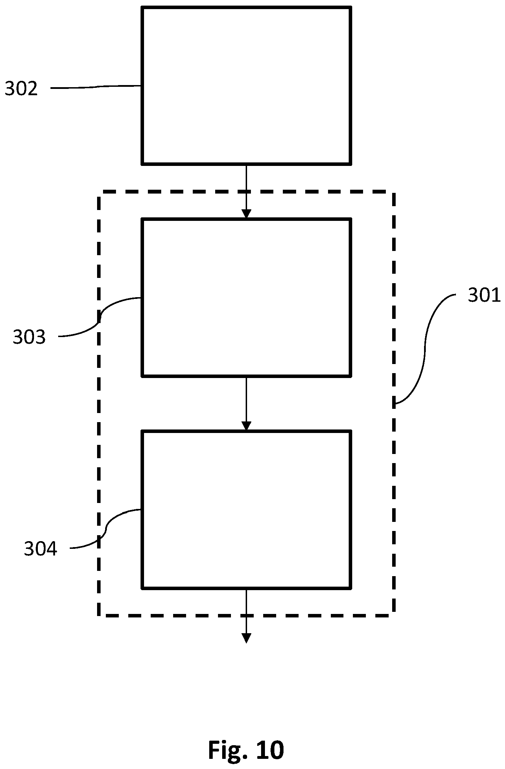

Figure 10 schematically illustrates a method of manufacturing a protein structuring module 1 in accordance with an embodiment of the invention. The method comprises a step 302 of providing an element comprising a chamber. The method further involves a step 301 of forming the conduits of the protein structuring module between an inlet section and an outlet section thereof. In particular, the step of forming 301 of the conduits involves a step 303 of providing one or more inserts and inserting 304 said inserts into the chamber. The conduits are thereby formed as gaps between the inserts in the chamber. Each conduit then has an inlet at the inlet section and an outlet at the outlet section; the inlet section is thus formed by the inlets of the protein structuring module and the outlet section is thus formed by the outlets of the protein structuring module. Because the conduits are formed as gaps between the inserts in the chamber of the protein structuring module, the protein structuring module manufactured by the method according to the invention is significantly easier to clean. This is because for cleaning of the protein structuring module, the inserts can be removed from the protein structuring module and cleaned separately or individually.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. Protein structuring module for use in a food product manufacturing arrangement, wherein the protein structuring module comprises one or more conduits between an inlet section and an outlet section, each conduit having an inlet at the inlet section for receiving a protein constituent and an outlet at the outlet section for providing a structured food substance including a structured protein material, the one or more conduits being configured for establishing a shear stress in the protein constituent for unfolding and/or aligning molecules in the protein constituent, such as to form the structured food substance,
wherein the protein structuring module comprises a chamber between the inlet section and the outlet section, and wherein the protein structuring module further comprises one or more inserts configured for being inserted in the chamber for forming an insert bundle in the chamber of the protein structuring module,
wherein the one or more conduits are formed by gaps between the inserts.

2. Protein structuring module according to claim 1, wherein at least one of:
- the one or more inserts is provided as one or more rods;
- the one or more inserts is provided as one or more of solid panels to be inserted in the chamber, such as to form the insert bundle in the chamber as an array of solid panels; or
- the one or more inserts are curved plates, the curved plates being configured for being inserted in the chamber in a circular arrangement for forming the insert bundle; or
the one or more inserts of the insert bundle are concentric.

3. Protein structuring module according to any of the preceding claims, wherein the one or more inserts form an integrated whole, wherein the integrated whole is configured for being deformed for being inserted into the chamber.

4. Protein structuring module according to claim 3, wherein the integrated whole is a flexible sheet configured for being deformed, such as to create spaced-apart surface area portions of the flexible sheet.

5. Protein structuring module according to any of the claims 1-4, wherein the one or more inserts comprise a number of projecting parts extending in transverse directions with respect to lengths of the inserts, the projecting parts providing spacings between the inserts in the insert bundle.

6. Protein structuring module according to claim 5, wherein the projecting parts of each insert are releasably attached to the other inserts in the insert bundle, wherein lengths of the projecting parts define local widths of the one or more conduits.

7. Protein structuring module according to any of the preceding claims, wherein the chamber comprises an interior wall, wherein at least one of:
- the interior wall is provided with an attachment structure for securing the insert bundle in the chamber; and
- the interior wall is shaped for engaging with an outer contour of the insert bundle in the chamber, such as to secure the insert bundle in the chamber.

8. Protein structuring module according to any of the preceding claims, wherein at least one of:
- at least some of the one or more inserts have a width that is uniform along a length of the insert;
- at least some of the one or more inserts have a width that varies locally along the length of the insert; and
- at least some of the one or more inserts have a width that differs from widths of other inserts.

9. Protein structuring module according to any of the preceding claims, wherein the gaps between the inserts are defined by cross-sectional shapes of the one or more inserts, wherein the cross-sectional shapes are one or more of a group comprising: regular polygonal shapes, irregular polygonal shapes, circular shapes, elliptical shapes, teardrop shapes, arcuate shapes.

10. Protein structuring module according to claim 9, wherein at least one of:
- the cross-sectional shapes of at least some of the inserts morph along the lengths of the inserts into different cross-sectional shapes;
- the cross-sectional shapes of at least some of the inserts varies in rotational orientation along the lengths of the inserts; or
wherein at least some of the one or more inserts extend outward from the chamber for shaping the inlet section and/or the outlet section.

11. Arrangement for providing a structured food substance for manufacturing a food product, wherein the structured food substance includes structured protein material, the arrangement comprising a protein structuring module according to any of the preceding claims,
wherein the protein structuring module comprises one or more conduits between an inlet section and an outlet section, each conduit having an inlet at the inlet section for receiving a protein constituent and an outlet at the outlet section for providing a structured food substance including a structured protein material, the one or more conduits being configured for establishing a shear stress in the protein constituent for unfolding and/or aligning molecules in the protein constituent, such as to form the structured food substance,
wherein the protein structuring module comprises a chamber between the inlet and the outlet section, and wherein the protein structuring module further comprises one or more inserts configured for being inserted in the chamber for forming an insert bundle in the chamber of the protein structuring module,
wherein the one or more conduits are formed by gaps between the inserts.

12. Arrangement according to claim 11, wherein the arrangement is a modular arrangement comprising one or more modules, the one or more modules including at least one protein structuring module according to any of the claims 1-10.

13. Arrangement according to claim 11 or 12, wherein at least one of:
the arrangement further comprises a heating element, the arrangement further comprises a protein heating module comprising the heating element, wherein the heating element includes a heating reservoir for exposing the protein constituent to heat, wherein the inlets of the conduits are connected to the heating reservoir for receiving the protein constituent in a heated state; or
wherein the arrangement further comprises a heating element, wherein the heating element is configured for at least one of:
- heating the protein constituent outside of the protein structuring module; or
- heating the protein constituent inside of the conduits of the protein structuring module.

14. Protein heating module for use in a food product manufacturing arrangement according to any of the claims 11-13, wherein the protein heating module comprises a heating element including a heating reservoir for exposing a protein constituent to heat, wherein the heating reservoir is configured for being connected to inlets of a protein structuring module according to any of the claims 1-10 for providing the protein constituent to the protein structuring module in a heated state.

15. Method of manufacturing a protein structuring module for use in a food product manufacturing arrangement,
wherein the method comprises forming one or more conduits between an inlet section and an outlet section of the protein structuring module, each conduit having an inlet at the inlet section for receiving a protein constituent and an outlet at the outlet section for providing a structured food substance including a structured protein material, the one or more conduits being configured for establishing a shear stress in the protein constituent for unfolding and/or aligning molecules in the protein constituent, such as to form the structured food substance,
wherein for the step of forming the one or more conduits, the method comprises providing an element comprising a chamber,
wherein the step of forming the one or more comprises providing one or more inserts, and further comprises inserting the one or more inserts into the chamber, such as to form an insert bundle in the chamber of the protein structuring module between the inlet section and the outlet section,
wherein the step of inserting the one or more inserts forms gaps between the inserts, the gaps forming the one or more conduits.
